(19) **Europäisches Patentamt**

**European Patent Office**

**Office européen des brevets**

(11) **EP 1 353 150 B1**

(12) **EUROPÄISCHE PATENTSCHRIFT**

(45) Veröffentlichungstag und Bekanntmachung des Hinweises auf die Patenterteilung:
**20.09.2006 Patentblatt 2006/38**

(51) Int Cl.:
*G01D 11/20* (2006.01)

(21) Anmeldenummer: **03008135.0**

(22) Anmeldetag: **08.04.2003**

(54) **Drehwinkelmesseinrichtung**

Angle detector

Capteur d'angle

(84) Benannte Vertragsstaaten:
**AT BE BG CH CY CZ DE DK EE ES FI FR GB GR HU IE IT LI LU MC NL PT SE SI SK TR**

(30) Priorität: **12.04.2002 DE 10216376**

(43) Veröffentlichungstag der Anmeldung:
**15.10.2003 Patentblatt 2003/42**

(73) Patentinhaber: **SICK STEGMANN GmbH**
**78166 Donaueschingen (DE)**

(72) Erfinder:
• **Mutschler, Reinhold**
**78056 Villingen-Schwenningen (DE)**

• **Schill, Jürgen**
**78073 Bad Dürrheim (DE)**

(74) Vertreter: **Ludewigt, Christoph**
**Sick AG,**
**Intellectual Property,**
**Sebastian-Kneipp-Strasse 1**
**79183 Waldkirch (DE)**

(56) Entgegenhaltungen:
**EP-A- 0 280 390          EP-A- 1 154 241**
**US-A- 5 018 397**

**Beschreibung**

Die Erfindung betrifft eine Drehwinkelmesseinrichtung gemäß dem Oberbegriff des Anspruch 1.

Winkelmessgeräte, auch Drehgeber oder Encoder genannt, weisen außer dem eigentlichen Winkelsensor, der in einem Gehäuse untergebracht ist, einen Flansch auf, der mittels einer Statorkupplung mit dem Gehäuse eines zu messenden Antriebsystems verbunden wird. Eine Welle des Drehgebers, auch Drehgeber- oder Encoderwelle genannt, wird mittels einer Wellenkupplung oder bevorzugt starr, vorzugsweise über eine Verschraubung, mit der zu messenden Antriebswelle verbunden.

Neben diesen mechanischen Schnittstellen weist der Drehgeber einen Maßstab auf, der die Winkelmaßverkörperung trägt und von einem Abtaster detektiert wird, der Positionssignale generiert, die eine Signal- und Datenverarbeitungseinheit durchlaufen und anschließend mittels einer nachgeschalteten elektrischen Schnittstelle an eine übergeordnete Regelung, etwa eine Motorregelung oder an eine Steuerung übertragen und ausgewertet werden. Die physikalische Technologie der entsprechenden Drehgeber kann etwa optisch, magnetisch, induktiv oder potentiometrisch ausgestaltet sein.

Die bereits erwähnte Statorkupplung dient zur verdrehfesten Verbindung zwischen einer Antriebseinrichtung und einer Winkelmesseinrichtung als verdrehfestes Verbindungselement eingesetzt. Dazu wird das Gehäuse des Drehgebers mittels dieser Kupplung verdrehstarr mit einem Aktorgehäuse der Antriebseinrichtung verbunden, um einen Winkelmessfehler zu vermeiden. Vorzugsweise sollte der Winkelmessfehler, der durch die Statorkupplung verursacht wird, geringer sein als die Messgenauigkeit des Drehgebers.

Neben Winkelmesseinrichtungen sind auch Messgeräte, die andere mechanische Messgrößen, wie etwa die Winkelgeschwindigkeit, die Winkelbeschleunigung oder das Drehmoment messen, vermittels dieser Statorkupplung an den Stator einer Antriebseinrichtung ankoppelbar. Dabei lässt die Statorkupplung als Drehmomentstütze axiale und radiale Scherbewegungen zu, nicht jedoch Drehbewegungen.

Nach dem Stand der Technik sind verschiedene metallische, sowie aus anderen federnden Materialien bestehende Statorkupplungen bekannt. Kupplungen, bei denen die Verbindungsstege ein Parallelogramm bilden, sind in DE 89 15 109 U und DE 100 22 555 A1 beschrieben. Hierbei sind insgesamt vier Stege um jeweils 90 Grad versetzt an einem Material hoher Wechselfestigkeit angeordnet. An jeweils zwei gegenüberliegenden, d.h. um 180 Grad versetzt angeordneten Stegen wird der Stator der Antriebseinrichtung einerseits sowie das Drehgebergehäuse andererseits befestigt.

Die Montage dieser Anordnungen gestaltet sich jedoch bei beschränktem Bauraum als schwierig, da die einzelnen Komponenten, bestehend aus Drehgeber mit Encoderwelle, Antriebseinrichtung mit Gehäuse (Stator) und Antriebswelle und Statorkupplung, miteinander verbunden werden müssen. Die DE 32 06 875 A1 und DE 33 01 205 A1 beschreiben eine im Inneren des Drehgebergehäuses angeordnete Statorkupplung. Diese Konstruktionen erfordern jedoch einen vergrößerten Bauraum.

Aus der US 5,018,397 ist eine gattungsgemäße Drehwinkelmesseinrichtung bekannt, bei welcher ein Encoder an eine Montageplatte montiert und dabei mit einer Antriebswelle verbunden wird. Für den dortigen speziellen Einsatzbereich muss der Encoder im nicht montierten Zustand mit seiner Encoderwelle verdrehfest verbunden sein, damit bei Montage ein Drehgebersignal mit der Stellung des zu messenden Elements synchronisiert ist. Dazu ist eine Arretierscheibe fest mit der Encoderwelle verbunden. Die Arretierscheibe wird über eine Art Unterlegscheibe, von der Rastlaschen abstehen, mit dem Encodergehäuse verriegelt, wobei zur Verriegelung der Encoderwelle die Rastlaschen in Aussparungen der Scheibe eingreifen. Diese Verriegelung wird aufgehoben wenn der Encoder an die Montageplatte angeschraubt wird, indem die Rastlaschen plattgedrückt werden und so die Arretierscheibe und damit die Encoderwelle freigegeben wird.

Die Aufgabe der Erfindung besteht darin, eine Drehwinkelmesseinrichtung zu schaffen, welche eine Statorkupplung zwischen dem Drehgebergehäuse und dem Aktorgehäuse aufweist, die Winkel-Messfehler vermeidet und eine erleichterte Montage des Drehgebers an den Aktor ermöglicht.

Diese Aufgabe wird erfindungsgemäß gelöst durch eine Vorrichtung mit den Merkmalen des Anspruchs 1.

Erfindungsgemäß weist die Drehwinkelmesseinrichtung wenigstens ein Verriegelungselement auf, welches, wenn der Drehgeber zusammen mit der Statorkupplung von dem Aktorgehäuse gelöst ist, die Encoderwelle mit dem Drehgebergehäuse drehfest verbindet und bei an dem Aktor festgelegter Statorkupplung die Encoderwelle freigibt, wobei das Verriegelungselement gebildet ist durch einen unrunden Ansatz der Encoderwelle, der zum Verriegeln in eine Aussparung der Statorkupplung eingreift.. Dann kann zur Montage des Drehgebers an den Aktor zunächst die Encoderwelle in oder auf die Antriebswelle des Aktors aufgeschraubt werden, indem in einfachster Weise das Drehgebergehäuse gedreht wird, denn dies ist über die Statorkupplung drehfest mit der Encoderwelle verbunden. Danach wird die Statorkupplung an dem Stator des Aktors, was zumeist das Aktorgehäuse ist, festgelegt. Dabei werden erfindungsgemäß die Verriegelungselemente gelöst und die Encoderwelle freigegeben. Es ist nicht notwendig zur Herstellung einer verdrehsicheren Wellenverbindung auf der Flanschseite des Drehgebers mit speziellem Werkzeug die Wellenverbindung herzustellen. Durch einfaches Handhaben des gesamten Drehgebergehäuses kann die Wellenverbindung hergestellt werden, was einfacher, schneller und damit kostengünstiger ist. Das Drehgebergehäuse bildet quasi das Werkzeug für die Wellenverbindung.

Weitere mit der Erfindung erzielten Vorteile bestehen insbesondere darin, gleichzeitig neben der Wellenverbindung auch eine verdrehsichere Statorkupplung zu erhalten. Darüber hinaus beansprucht die erfindungsgemäße Drehwinkelmesseinrichtung und darin insbesondere die Statorkupplung wenig Bauraum. Es ist eine problemlose und hochgenaue Winkelübertragung ermöglicht und gleichzeitig werden relative Verlagerungen der mittels der Statorkupplung verbundenen Gehäuse sowohl in Längsrichtung als auch in Querrichtung ausgeglichen. Namentlich für Drehgeber mit kleinen geometrischen Abmessungen, für deren Einbau nur ein beschränkter Bauraum zur Verfügung steht, ist diese Konstruktion vorteilhaft. Wird darüber hinaus die Statorkupplung beim Einbau vorgespannt, so ergibt sich als zusätzlicher Vorteil dieser Erfindung eine infolge dieser Vorspannung höhere Resonanzfrequenz der Kupplung im Zusammenwirken mit der Drehwinkelmesseinrichtung.

Das Verriegeln wird durch einfachstes Zusammenstecken des Ansatzes der Encoderwelle in die Aussparung bewirkt. Ebenso einfach lässt sich durch Abstreifen der Statorkupplung ein Freigeben der Encoderwelle bewirken.

Vorteilhafterweise weist die Statorkupplung eine Montageplatte, die die Aussparung enthält auf, die bevorzugt mit einer Drehmomentstütze verbunden ist. Die Montageplatte dient zur Befestigung der Statorkupplung an den Stator des Antriebselements, also das Aktorgehäuse. Die Drehmomentstütze ist einerseits an der Montageplatte befestigt und andererseits an dem Drehgebergehäuse festlegbar. Bei Befestigen der Montageplatte an dem Aktor wird die Montageplatte von dem unrunden Ansatz der Encoderwelle abgestreift und gibt diese frei. Dabei müssen Bereiche der Drehmomentstütze verformt werden. Deshalb besteht die Drehmomentstütze bevorzugt aus federelastischem Material und stellt so eine radial und axial nachgiebige mechanische Verbindung des Drehgebergehäuses mit dem Aktorgehäuse dar.

Wenn die Drehmomentstütze wenigstens ein Spannelement aufweist, das im nichtmontierten Zustand des Drehgebers die Montageplatte an dem Drehgeber festhält und zur Montage der Montageplatte an das Aktorgehäuse gegen seine Spannkraft verformbar ist, wird nur das Spannelement verformt und die eigentliche Drehmoment stütze bleib unverformt. Dies ist besonders vorteilhaft, da die Drehmomentstütze an die jeweiligen Bedingungen angepasst ist. So ist die Drehmomentstütze vorteilhafterweise nach Art eines Federparallelogramms ausgestaltet. Hierzu sind seitlich jeweils um 180 Grad und damit entgegengesetzt angeordnet jeweils zwei Stege an ein mittig zusammenhängendes Federblech angeformt. Diese Stege weisen Verbindungselemente zur Verbindung mit der Montageplatte und damit mit dem Aktorgehäuse auf. Zwei weitere Stege, die zu den letzteren um jeweils 90 Grad versetzt angeordnet sind, schaffen eine verdrehfeste Verbindung zum Statorgehäuse des Sensors.

Als federndes Verbindungselement weist die Statorkupplung eine Frequenz auf, bei welcher sie in Resonanz gerät. Um diesen Zustand zu vermeiden, sollte diese Frequenz möglichst groß sein, so dass die im Anwendungsfall auftretenden Drehzahlen unterhalb dieser Resonanzfrequenz liegen. Ist D die Federkonstante der Statorkupplung und J das Massen-Trägheitsmoment, so erhält man die Resonanzfrequenz f durch die Beziehung

$$f = \frac{1}{2\pi} \sqrt{\frac{D}{J}} \,.$$

Damit die Verformung reversibel ist und der Drehgeber mit der Statorkupplung auch mehrmals montiert werden kann besteht die Drehmomentstütze aus einem federelastischen Material, beispielsweise Federstahl oder Gummi. Die Montageplatte ist damit in Achsrichtung beweglich gehalten.

In konstruktiv einfacher Ausgestaltung der Erfindung ist die Montageplatte mit dem Aktorgehäuse verschraubbar.

Um das Drehgebergehäuse zur Montage leicht drehen zu können, ist vorteilhafterweise eine Kontur zum Ansetzen eines Werkzeugs vorgesehen, mit dessen Hilfe der Drehgeber gedreht und so die Encoderwelle in oder auf die Antriebswelle geschraubt werden kann.

Damit bei der Montage das beim Drehen aufgebrachte Drehmoment nicht ausschließlich über die Drehmomentstütze übertragen wird, ist in Weiterbildung der Erfindung vorgesehen, dass das der Statorkupplung zugewandte Ende des Drehgebergehäuses wenigstens einen Ansatz aufweist, der in die Aussparung eingreifen kann, so dass auch das Drehgebergehäuse und die Montageplatte zur Montage des Drehgebers an den Aktor verdrehfest miteinander verbindbar sind.

Zur sicheren Verbindung der Wellen miteinander ist vorgesehen, dass das Wellenende der Encoderwelle und der Antriebswelle einen Innen- bzw. Außenkonus zur Wellenverbindung aufweisen.

Im Nachfolgenden wird die Erfindung unter Bezugnahme auf die Zeichnungen im Einzelnen erläutert. In der Zeichnung zeigen:

**Fig. 1**     eine erfindungsgemäße Drehwinkelmesseinrichtung mit Statorkupplung;

**Fig. 2**     die Statorkupplung aus Fig. 1;

**Fig. 3**     eine Drehmomentstütze der Statorkupplung aus Fig. 1;

**Fig. 4 und 5**     Ansichten einer weiteren Ausführungsform einer Drehmomentstütze;

**Fig. 6 und 7**     Ansichten einer Ausführungsform der erfindungsgemäßen Drehwinkelmesseinrichtung mit einer Statorkupplung mit Drehmomentstütze nach Fig. 4.

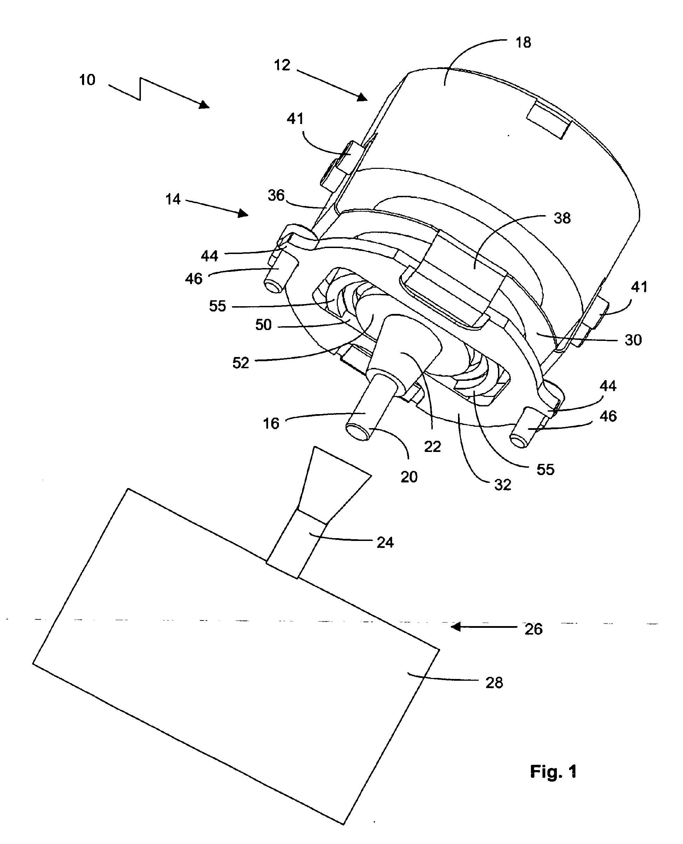

Die in den Fig. 1 dargestellte Drehwinkelmesseinrichtung 10 weist einen Drehgeber 12 und eine Statorkupplung 14 auf. Der Drehgeber 12 umfasst eine Encoderwelle 16, die in einem Drehgebergehäuse 18 gelagert ist. In dem Drehgebergehäuse 18 sind die notwendigen Komponenten zur Winkelbestimmung der Encoderwelle 16, wie Maßverkörperung, Abtasteinheit, Elektronik usw. enthalten. Die Encoderwelle 16 weist endseitig ein Gewinde 20 und einen Außenkonus 22 zur verdrehsicheren kraftschlüssigen Verbindung mit einer nur schematisch dargestellten Antriebswelle 24, die einen entsprechenden Innenkonus aufweisen sollte, einer zu messenden Antriebseinheit 26, die im folgenden Aktor genannt wird. Der Aktor 26 weist ein Aktorgehäuse 28 auf, in dem die Antriebswelle 24 und gegebenenfalls entsprechende Antriebselektronik gelagert ist.

Zum Messen der Drehung der Antriebswelle 24 muss einerseits die Encoderwelle 16 mit der Antriebswelle 24 und andererseits das Drehgebergehäuse 18 mit dem Aktorgehäuse 28 verbunden werden. Dazu dient die Statorkupplung 14, deren Aufbau und Funktion im Folgenden näher beschrieben werden.

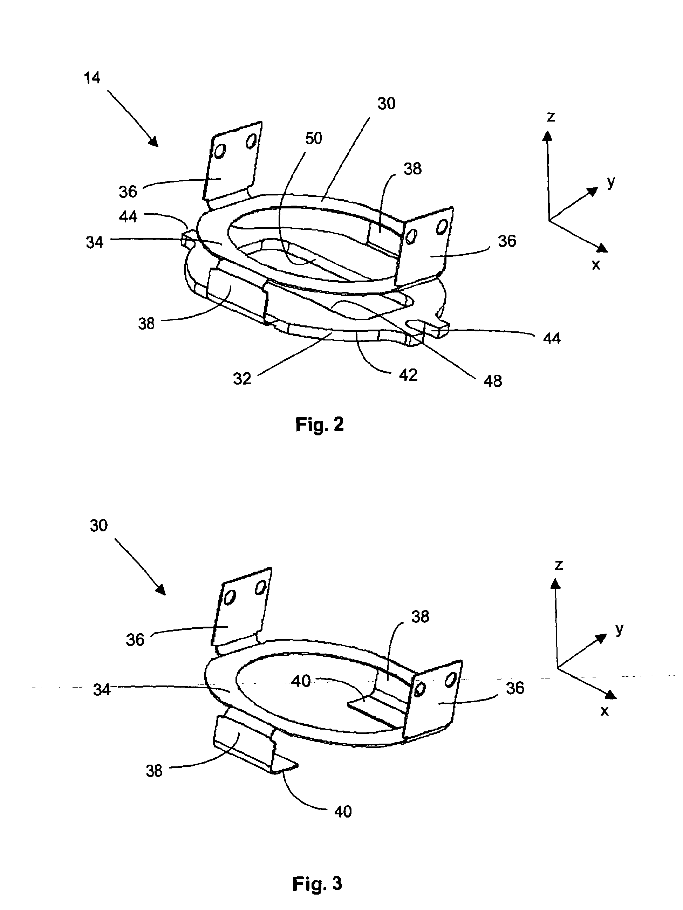

Die in Fig. 2 dargestellte Statorkupplung 14 umfasst eine Drehmomentstütze 30 und eine Montageplatte 32. Die Drehmomentstütze 30 dient zur Aufnahme des Drehmomentes bei der Messung der Drehung bzw. der Winkelstellung der Antriebswelle 24, wobei die Drehmomentstütze 30 einerseits an dem Drehgebergehäuse 18 und andererseits an der Montageplatte 32 festgelegt ist, so dass die Statorkupplung 14 insgesamt das Drehgebergehäuse 18 mit dem Aktorgehäuse 28 verbindet.

Die Drehmomentstütze 30 einer ersten Ausführungsform ist in Fig. 3 separat dargestellt und über als einstückiges Stanz- und Biegeteil ausgebildet. Die Drehmomentstütze 30 besteht aus einem Material hoher Wechselfestigkeit, wie etwa Federstahl.

Eine vorteilhafte Geometrie der Drehmomentstütze 30 besteht darin, diese nach Art eines Parallelogramms auszugestalten. Legt man, wie in der Fig. 3 dargestellt, ein kartesisches Koordinatensystem zugrunde, dass ein Mittenbereich 34 in der xy-Ebene liegt und die z-Koordinatenachse senkrecht dazu in Richtung der Encoderwelle 16 liegt, so sind zwei erste Biegebalken 36 zur Verbindung mit dem Drehgebergehäuse 18 an den Mittenbereich 34 in positive z-Richtung angeformt. Die Biegebalken 36 können dabei prinzipiell auch in negative z-Richtung weisen und sind diametral an dem Mittenbereich 34 angeordnet.

Entsprechend sind zwei zweite Biegebalken 38 zur Verbindung mit der Montageplatte 32 um 90 Grad versetzt am Mittenbereich 34 angeformt, die in die entgegengesetzte z-Richtung abstehen. Dadurch entsteht ein Federparallelogramm, welches in besonderer Weise eine winkeltreue Ankopplung des Drehgebers 12 an das zu messende Antriebssystem gewährleistet. In der Fig. 3 ist eine Umbiegung der zweiten Biegebalken 38 in negative z-Richtung dargestellt.

Weiterhin ist zusätzlich eine Umbiegung der Enden 40 der zweiten Biegebalken 38 in y-Richtung vorgenommen. Diese Umbiegung kann alternativ nach innen, wie in der Figur 3 dargestellt, oder nach außen vorgenommen sein.

Über die umgebogenen Enden 40 sind die zweiten Biegebalken 38 mit der Montageplatte 32 verbunden, in dem dargestellten Ausführungsbeispiel verschweißt. Über die freien Enden der ersten Biegebalken 36 ist die Drehmomentstütze 30 mit dem Drehgebergehäuse 18 verbunden, beispielsweise über Schrauben 41 verschraubt. Prinzipiell sind andere Verbindungsarten, wie Verschraubung, Verschweißung, Verklemmung, Vernietungen oder andere vergleichbare Befestigungstechnologien denkbar.

Die Montageplatte 32 besteht in dem Ausführungsbeispiel im wesentlichen aus einer ebenen Grundplatte 42, an welche außenseitig Aufnahmen 44 für Befestigungselemente, wie Schrauben 46, angeformt sind. Über die Schrauben 46 ist die Montageplatte 32 an dem Aktorgehäuse 28 anschraubbar.

Die Montageplatte 32 weist im wesentlichen zentral eine Ausnehmung 48 auf, die in dem Ausführungsbeispiel nach den Fig. 1 und 2 in etwa eine Rechteckform mit Längsseiten 50 hat.

Die Encoderwelle 16 weist einen unrunden Ansatz 52 auf, der in die Aussparung 48 passt und bei in die Aussparung 48 eingesetztem Ansatz 52 an den Längsseiten 50 anliegt. Dadurch kann die Encoderwelle 16 sich in eingesetztem Zustand nicht gegenüber der Montageplatte 32 und damit gegenüber der Statorkupplung 14 verdrehen.

Die Funktion der Statorkupplung 14 wird aus der folgenden schrittweisen Beschreibung der Montage des Drehgebers 12 deutlich.

Zunächst ist die Statorkupplung 14 an dem Drehgeber 12 befestigt, wobei die Encoderwelle 16 mit ihrem Ansatz 52 in die Aussparung 48 der Montageplatte 32 eingesetzt ist. Das Drehgebergehäuse 18, die Encoderwelle 16 und die Statorkupplung 14 mit ihrer Montageplatte 32 bilden eine verdrehfeste Einheit, wie sie in Fig. 1 dargestellt ist. Dann wird die Encoderwelle 16 mit ihrem Gewinde 20 in die Antriebswelle 24 des Aktors 26 eingeschraubt, indem das Drehgebergehäuse 18 und damit die Encoderwelle 16 gedreht wird. Um die Verdrehung des Drehgebers 12 zu erleichtern, kann das Drehgebergehäuse 18 eine Kontur zum Ansetzen eines Werkzeuges, wie z.B. eines Schraubenschlüssels, aufweisen. Auch kann es vorteilhaft sein, dass Teile 55 des Drehgebergehäuses 18 ebenfalls in die Aussparung eingreifen, so dass das Drehgebergehäuse 18 direkt und nicht nur indirekt über die Drehmomentstütze 30 gegenüber der Montageplatte 32 verdrehgesichert ist. Dann kann gegebenenfalls ein größeres Drehmoment zum Festziehen der Encoderwelle 16 aufgebracht werden ohne dass die Gefahr besteht, die Drehmomentstütze 30 zu verbiegen.

Nachdem die Encoderwelle 16 mit der Antriebswelle 24 verbunden wurde, wird die Montageplatte 32 an das Aktorgehäuse 28 mit den Schrauben 46 geschraubt. Die Abmessungen der Wellen 16 und 24 sind derart bemessen, dass beim Befestigen der Montageplatte 32, diese um eine Strecke, die mindestens ihrer Dicke entspricht, in Achsrichtung auf das Aktorgehäuse zubewegt wird. Die Drehmomentstütze 30 wird dabei gespannt bzw. die einzelnen Biegebalken 36 und 38 sowie der Mittenbereich 34 aus der Ruhelage verbogen. Durch die Verschiebung der Montageplatte 32 in Achsrichtung wird diese von dem Ansatz 52 der Encoderwelle 16 abgestreift und die Verriegelung der Encoderwelle 16 gelöst. Die erfindungsgemäße Drehwinkelmesseinrichtung 10 ist montiert und betriebsbereit.

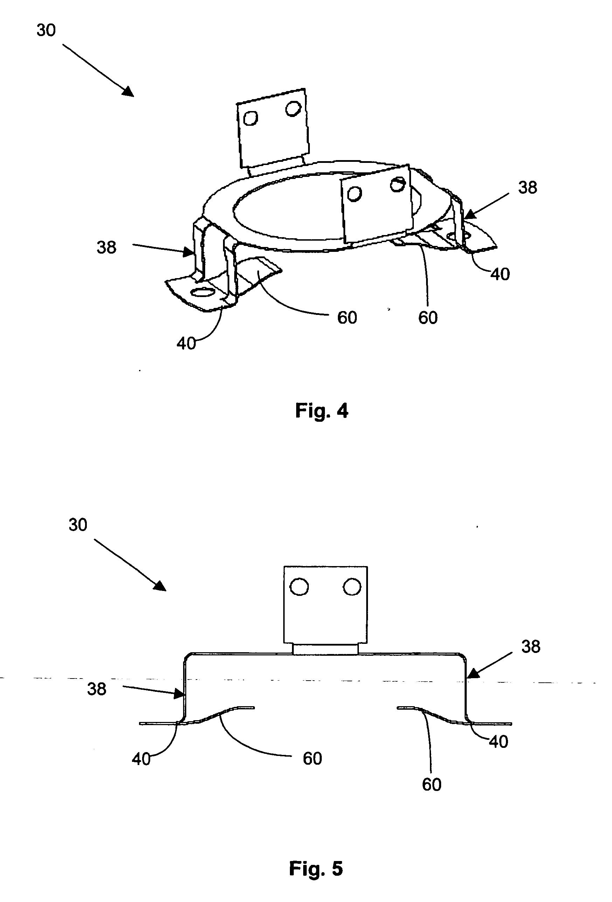

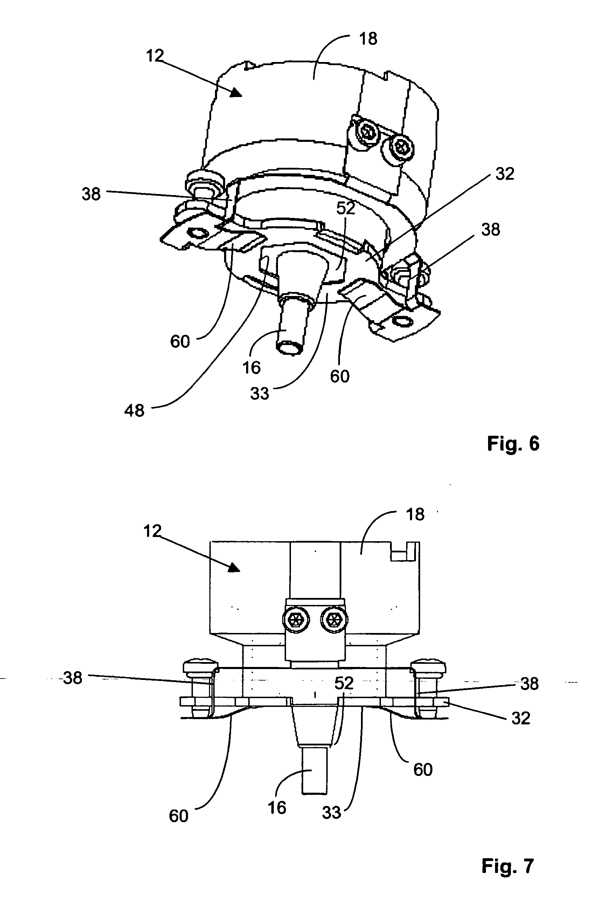

In einer weiteren Ausführungsform der Erfindung kann die Drehmomentstütze 30 wie in Fig. 4 und 5 dargestellt ausgebildet sein. Gleiche Teile tragen gleiche Bezugszeichen. Im Unterschied zu der Drehmomentstütze aus Fig. 3 sind die Enden 40 der zweiten Biegebalken 38 nicht mit der Montageplatte 32 verschweißt oder in anderer Weise fest mit der Montageplatte 32 verbunden. Stattdessen weisen die Enden 40 jeweils ein Spannelement, z.B. eine Blattfeder 60 auf, die vorzugsweise einstückig mit der Drehmomentstütze 30 ausgebildet ist und auf der dem Drehgebergehäuse 18 abgewandten Seite 33 der Montageplatte 32 liegt, wie dies in Fig. 6 und 7 zu erkennen ist. Die Blattfedern 60 spannen die Statorkupplung vor, so dass die Montageplatte 32 im nichtmontierten Zustand des Drehgebers 12 gegen das Drehgebergehäuse 18 gespannt ist und die Aussparung 48 der Montageplatte 32 den Ansatz 52 der Encoderwelle 16 aufnimmt.

In diesem Ausführungsbeispiel (Fig. 6) ist auch dargestellt, dass der Ansatz 52 eine andere Form - hier sechseckig - haben kann und formschlüssig in die Aussparung 48 der Montageplatte 32 aufgenommen ist.

Der Vorteil dieser Ausführungsform besteht darin, dass bei Festlegen der Montageplatte 32 an dem Aktorgehäuse die das Drehmoment im Betrieb des Drehgebers 12 aufnehmenden Bereiche der Drehmomentstütze 30 nicht verbogen oder verspannt werden. Stattdessen werden lediglich die Blattfedern 60 platt gedrückt. Die Eigenschaften der Drehmomentstütze 30 können damit besser berechnet und der Anwendung entsprechend angepasst werden.

**Patentansprüche**

1. Drehwinkelmesseinrichtung zur Messung von winkelabhängigen Messgrößen mit einem Drehgeber (12) mit einer Encoderwelle (16), welche in einem Drehgebergehäuse (18) gelagert ist, mit einer Statorkupplung (14) zur verdrehfesten Verbindung eines Drehgebergehäuses (18) mit einem Aktorgehäuse (28) eines zu messenden Antriebssystems und die Encoderwelle (16) mit einer Antriebswelle (24) des zu messenden Antriebssystems verdrehfest verbindbar ist und die Antriebswelle (24) eine zumindest weitgehend gemeinsame Drehachse mit der Encoderwelle (16) des Drehgebers (12) aufweist, wobei wenigstens ein Verriegelungselement (52), welches, wenn der Drehgeber (12) mit der Statorkupplung (14) von dem Aktorgehäuse (28) gelöst ist, die Encoderwelle (16) über die Statorkupplung (14) mit dem Drehgebergehäuse (18) drehfest verbindet und bei an dem Aktor (26) festgelegter Statorkupplung (14) die Encoderwelle (16) freigibt, **dadurch gekennzeichnet, dass** das Verriegelungselement (52) gebildet ist durch einen unrunden Ansatz (52) der Encoderwelle (16), der zum Verriegeln in eine Aussparung (48) der Statorkupplung (14) eingreift.

2. Drehwinkelmesseinrichtung nach Anspruch 1, **dadurch gekennzeichnet, dass** die Statorkupplung (14) eine Montageplatte (32) zur Montage der Statorkupplung (14) an den Aktor (26) aufweist und die Montageplatte (32) die Aussparung (48) aufweist.

3. Drehwinkelmesseinrichtung nach Anspruch 2, **dadurch gekennzeichnet, dass** die Statorkupplung (14) eine mit der Montageplatte (32) verbundene Drehmomentstütze (30) aufweist, die an dem Drehgebergehäuse (18) festlegbar und an der Montageplatte (32) befestigbar ist.

4. Drehwinkelmesseinrichtung nach Anspruch 3, **dadurch gekennzeichnet, dass** die Drehmomentstütze (30) wenigstens ein Spannelement (60) aufweist, das im nichtmontierten Zustand des Drehgebers (12) die Montageplatte (32) an dem Drehgeber (12) festhält und zur Montage der Montageplatte (32) an das Aktorgehäuse (28) gegen seine Spannkraft verformbar ist.

5. Drehwinkelmesseinrichtung nach Anspruch 3 oder 4, **dadurch gekennzeichnet, dass** die Drehmomentstütze (30) aus einem federelastischen Material besteht, beispielsweise Federstahl, so dass bei an dem Drehgebergehäuse (18) festgelegter Drehmomentstütze (30) die Montageplatte (32) in Achsrichtung bewegbar ist.

6. Drehwinkel-Messsystem nach einem der vorhergehenden Ansprüche, **dadurch gekennzeichnet, dass** die Drehmomentstütze (30) nach Art eines Federparallelogramms ausgebildet ist.

7. Drehwinkelmesseinrichtung nach einem der vorhergehenden Ansprüche, **dadurch gekennzeichnet, dass** die Montageplatte (32) mit dem Aktorgehäuse (28) verschraubbar ist.

8. Drehwinkelmesseinrichtung nach einem der vorhergehenden Ansprüche, **dadurch gekennzeichnet, dass** das Drehgebergehäuse (18) eine Kontur (54) zum Ansetzen eines Werkzeugs aufweist, mit dessen Hilfe der Drehgeber (12) gedreht und so die Encoderwelle (16) in oder auf die Antriebswelle (24) geschraubt werden kann.

9. Drehwinkelmesseinrichtung nach einem der vorhergehenden Ansprüche, **dadurch gekennzeichnet, dass** das der Statorkupplung (14) zugewandte Ende des Drehgebergehäuses (18) wenigstens einen Ansatz (55) aufweist, der in die Aussparung (48) eingreifen kann, so dass auch das Drehgebergehäuse (18) und die Montageplatte (32) zur Montage des Drehgebers (12) an den Aktor (26) verdrehfest miteinander verbindbar sind.

10. Drehwinkelmesseinrichtung nach einem der vorhergehenden Ansprüche, **dadurch gekennzeichnet, dass** das Wellenende der Encoderwelle (16) und der Antriebswelle einen Innen- bzw. Außenkonus (2) zur Wellenverbindung aufweisen.


## Claims

1. Rotation angle measurement device for measuring angle-dependent measurement values, including a rotational transducer (12) having an encoder shaft (16) which is journalled in a rotational transducer housing (18), a stator coupling (14) for forming a rotationally fixed connection between the rotational transducer housing (18) and an actuator housing (28) of a drive system to be measured, the encoder shaft (16) being adapted to be connected, in a rotationally fixed manner, to a drive shaft (24) of the drive system to be measured, wherein the drive shaft (24) has an axis of rotation that substantially coincides with an axis of rotation of encoder shaft (16) of the rotational transducer (12), wherein at least one locking mechanism (52) connects the encoder shaft (16) and the rotational transducer housing (18) in a rotationally fixed manner when the rotational transducer (12) and the stator coupling (14) are separated from the actuator housing (28) and frees the encoder shaft (16) when the stator coupling (14) is secured to the actuator (26), **characterized in that** the locking mechanism (52) is formed by a non-circular shoulder (52) of the encoder shaft (16), which shoulder engages in a cutout (48) of the stator coupling (14) for locking purposes.

2. Rotation angle measurement device according to Claim 1, **characterized in that** the stator coupling (14) comprises a mounting plate (32) for installing the stator coupling (14) on the actuator (26) and the mounting plate (32) defines the cutout (48).

3. Rotation angle measurement device according to Claim 2, **characterized in that** the stator coupling (14) includes a torque support (30) connected to the mounting plate (32) which can be fixedly attached to the rotational transducer housing (18) and the mounting plate (32).

4. Rotation angle measurement device according to Claim 3, **characterized in that** the torque support (30) includes at least one tensioning element (60) which, when the rotational transducer (12) is not installed, secures the mounting plate (32) on the rotational transducer (12) and, for installing the mounting plate (32) to the actuator housing (28), is deformable in opposition to its tensioning force.

5. Rotation angle measurement device according to Claim 3 or 4, **characterized in that** the torque support (30) is made of a spring-elastic material, such as spring steel, so that, when the torque support (30) is attached to the rotational transducer housing (18), the mounting plate (32) can move in the axial direction.

6. Rotation angle measurement device according to one of the preceding claims, **characterized in that** the torque support (30) is formed in the manner of a spring parallelogram.

7. Rotation angle measurement device according to one of the preceding claims, **characterized in that** the mounting plate (32) can be screw-connected to the actuator housing (28).

8. Rotation angle measurement device according to one of the preceding claims, **characterized in that** the rotational transducer housing (18) has a peripheral contour (54) for grasping with a tool with which the rotational transducer (12) can be rotated for screwing the encoder shaft (16) in or onto the drive shaft (24).

9. Rotation angle measurement device according to one of the preceding claims, **characterized in that** the end of the rotational transducer housing (18) facing the stator coupling (14) includes at least one shoulder (55) which can extend into the cutout (48) so that the rotational transducer housing (18) and the mounting plate (32) for installing the rotational transducer (12) on the actuator (26) can be connected to each other in a rotationally fixed manner.

10. Rotation angle measurement device according to one of the preceding claims, **characterized in that** the ends of the encoder shaft (16) and the drive shaft include internal and external cones (2) for the shaft connection.

## Revendications

1. Dispositif de mesure d'angle de rotation pour la mesure de grandeurs de mesure dépendantes de l'angle avec un encodeur (12) comportant un arbre d'encodeur (16), lequel arbre est logé dans un boîtier d'encodeur (18), un accouplement de stator (14) pour la liaison résistante à la torsion d'un boîtier d'encodeur (18) à un boîtier d'actionneur (28) d'un système d'entraînement à mesurer et l'arbre d'encodeur (16) pouvant être relié, de manière résistante à la torsion, à un arbre d'entraînement (24) du système d'entraînement à mesurer et l'arbre d'entraînement (24) présentant un axe de rotation au moins largement commun avec l'arbre d'encodeur (16) de l'encodeur (12), dans lequel au moins un élément de verrouillage (52) qui, lorsque l'encodeur (12) avec l'accouplement de stator (14) est détaché du boîtier d'actionneur (28), relie l'arbre d'encodeur (16) au moyen de l'accouplement de stator (14) au boîtier d'encodeur (18) de façon solidaire en rotation et libère l'arbre d'encodeur (16) lorsque l'accouplement de stator (14) est fixé sur l'actionneur (26), **caractérisé en ce que** l'élément de verrouillage (52) est formé par une embase (52) ovale de l'arbre d'encodeur (16), qui s'engage pour le verrouillage dans un évidement (48) de l'accouplement de stator (14).

2. Dispositif de mesure d'angle de rotation selon la revendication 1, **caractérisé en ce que** l'accouplement de stator (14) présente une plaque de montage (32) pour le montage de l'accouplement de stator (14) sur l'actionneur (26) et la plaque de montage (32) présente l'évidement (48).

3. Dispositif de mesure d'angle de rotation selon la revendication 2, **caractérisé en ce que** l'accouplement de stator (14) présente un support de couple (30) relié à la plaque de montage (32), qui peut être fixé sur le boîtier d'encodeur (18) et peut être attaché à la plaque de montage (32).

4. Dispositif de mesure d'angle de rotation selon la revendication 3, **caractérisé en ce que** le support de couple (30) présente au moins un élément de serrage (60), qui maintient la plaque de montage (32) sur l'encodeur (12) lorsque l'encodeur (12) n'est pas monté et peut être déformé contre sa force de serrage pour le montage de la plaque de montage (32) sur le boîtier d'actionneur (28).

5. Dispositif de mesure d'angle de rotation selon la revendication 3 ou 4, **caractérisé en ce que** le support de couple (30) est composé d'un matériau à déformation élastique à la façon d'un ressort, par exemple de l'acier à ressort, de sorte que la plaque de montage (32) peut être déplacée dans le sens de l'axe lorsque le support de couple (30) est fixé sur le boîtier d'encodeur (18).

6. Système de mesure d'angle de rotation selon l'une des revendications précédentes, **caractérisé en ce que** le support de couple (30) est conçu à la façon d'un parallélogramme à ressort.

7. Dispositif de mesure d'angle de rotation selon l'une des revendications précédentes, **caractérisé en ce que** la plaque de montage (32) peut être vissée au boîtier d'actionneur (28).

8. Dispositif de mesure d'angle de rotation selon l'une des revendications précédentes, **caractérisé en ce que** le boîtier d'encodeur (18) présente un contour (54) pour placer un outil à l'aide duquel l'encodeur (12) peut être tourné et ainsi l'arbre d'encodeur (16) peut être vissé dans ou sur l'arbre d'entraînement (24).

9. Dispositif de mesure d'angle de rotation selon l'une des revendications précédentes, **caractérisé en ce que** l'extrémité du boîtier d'encodeur (18), tournée vers l'accouplement de stator (14), présente au moins une embase (55), qui peut s'engager dans l'évidement (48), de sorte que le boîtier d'encodeur (18) et la plaque de montage (32) pour le montage de l'encodeur (12) sur l'actionneur (26) peuvent également être reliés entre eux de manière résistante à la torsion.

10. Dispositif de mesure d'angle de rotation selon l'une des revendications précédentes, **caractérisé en ce que** l'extrémité de l'arbre de l'encodeur (16) et l'extrémité de l'arbre d'entraînement présentent un cône intérieur ou extérieur (2) pour la liaison des arbres.

**Fig. 1**

Fig. 2

Fig. 3

30

38

38

40

60    60

40

**Fig. 4**

30

38

38

40

60

60

40

**Fig. 5**

**Fig. 6**

**Fig. 7**